# EUROPEAN PATENT APPLICATION

(11) **EP 2 913 763 A1**
(43) Date of publication of application: **02.09.2015**
(21) Application number: 14003169.1
(22) Date of filing: 12.09.2014
(51) Int. Cl.: G06F 17/24, G06F 3/0486

(54) **System and method for electronic form(s) management**

(30) Priority: 13.09.2013 US 201361877375 P
(71) Applicant: Babalola, Leroy Ayoleke, Buckinghamshire MK6 2EY (GB)
(72) Inventor: Babalola, Leroy Ayoleke, Buckinghamshire MK6 2EY (GB)

(57) **Abstract**

The present invention relates to a computer implemented methods for electronic form management, creation and distribution whereby source documents are overlayed with one or more data fields and populated by an end user.

## Description

### FIELD OF THE INVENTION

The present invention generally relates to building of electronic forms or documents, and more particularly relates to systems and methods for electronic form creation, distribution and user completion of the form using a mobile device or any touch screen device including laptops and PCs.

### BACKGROUND OF THE INVENTION

Increased use of electronic negotiations and transactions resulted in many organizations having requirements to publish summary information concerning negotiations to a third party system as well as other internal and external systems. The nature of business transaction can determine the number and complexity of the documents. For instance, public sector entities need to publish their procurement of request for quotations, auction, tender, solicitation or the like on their external websites. To comply with these requirements, organizations manually print the forms, manually enter the information and transmit via facsimile the form to the agency requiring the form. The agency then publishes the form on centrally administered electronic bulletin boards.

Prior to the advent of computing facilities, forms were printed and completed by hand or by a typewriter and were generally interpreted by an individual. In present scenario, many electronic forms are completed by individuals using a keyboard and/or a mouse or other pointing device; the data thus gathered is possibly stored for later reference; and a report is printed for an immediate purpose.

One common type of form, is a questionnaire, used to complete a survey. There are basically two ways survey information is acquired in the field and then processed. The first, and oldest, method of recorded survey is simply to distribute copies of a paper form which are filled out by hand and, at a later time, entered into a computer by a data entry operator. This is obviously an inefficient approach as data must be entered twice and error prone.

Another approach is followed by printing the questionnaire according to stringent technical specifications in a special form during the survey and then fed through a scanner utilizing Optical Mark Recognition (OMR)/Optical Character Recognition (OCR). The scanner then compiles all survey results into a computer file for use in analysis. However limitations of this approach includes high costs, the questionnaire forms are very expensive. Although accuracy is generally enhanced, the opportunity for human error still exists during the survey itself. Many forms, especially questionnaires, contain complex sequences of jumps to other parts of the form in the questionnaire depending on information filled in.

Furthermore, creation of each form according to a set of specifications and distribution of the created form to make it available for a number of end users in order to complete those forms and validating the response given or changes made by the users is a complex process flow. Manual form creation, distribution and completion renders the form management process into a tedious work.

U.S. Pat. No. 4,937,439 to Wanninger, et al. shows a desktop survey system for creating and scanning a survey form to be completed by a survey respondent. U.S. Pat. No. 7,590,932 to Britton, et al. discloses a method for an electronic healthcare management form creation. U.S. Pat. No. 5,704,029 to Wright discloses a system and method for computerized form creation and completion. U.S. Pat. No. 5,742,836 to Turpin, et al. shows a graphical programming system for creation and completion of goal oriented electronic forms.

In addition to the above constraints relating to the complex process flow of form creation, form management systems of prior art also has limitations such as limited customization of data fields during creation of form and limited access to the published form by end users for completion and submission of completed forms to the form issuing authority.

### SUMMARY OF THE INVENTION

The present invention relates to a computer implemented method for electronic document management, the method comprising following steps:
i) receiving a first user input for creating an electronic document;
ii) creating a document content based at least in part of the first user input and a second user input;
iii) validating the document content and publishing the electronic document; and
iv) retrieving and completing the electronic document based on a third user input using a mobile device through a communication network.

In another embodiment, the computer implemented method for electronic form creation and distribution, comprises steps of:
i) receiving a form in a source format from a first user in a form building application;
ii) creating an electronic form structure by overlaying with one or more data field selected from a graphical selection interface by a second user;
iii) publishing the electronic form by the first user;
iv) receiving and populating one or more data fields of the electronic form by a third user using a mobile device through a communication network; and
v) sending the electronic form to the first user or a third user through the communication network.

In yet another embodiment, a system for electronic form management, comprising: a user interface module for providing an electronic form in a source format; a form building module for modifying the electronic form by overlaying one or more selectable data field; a mobile device to receive and populate the data fields of the modified electronic form through a communication network; and a storage module configured to receive a completed electronic form.

In yet another embodiment, the computer implemented method for electronic form creation and distribution comprises receiving a form in a mobile device from a company server; modifying data fields of the form upon completion of each data field by an end user; determining the consecutive data field based on last entered data field and processing and sending the form to the company server.

### BRIEF DESCRIPTION OF DRAWINGS

**FIG. 1** shows a block diagram of a system for electronic form management according to an embodiment of the invention.
**FIG. 2** illustrates a flowchart of a computer implemented method for electronic document management according to an embodiment of the invention.
**FIG. 3** illustrates a flowchart of a computer implemented method for electronic form creation and distribution according to an embodiment of the invention.
**FIG. 4** shows an exemplary view of the graphical selection interface comprising selectable data fields.
**FIG. 5** shows an exemplary view of the electronic form structure overlaid with data fields from the graphical selection interface.
**FIG. 6** shows an exemplary view of the electronic form accessed through a mobile device.
**FIG. 7** shows a process flow of static form and dynamic form processing.

### DETAILED DESCRIPTION OF THE INVENTION

The following detailed description of the preferred embodiments presents a description of certain specific embodiments to assist in understanding the claims. However, the present invention is intended to cover alternatives, modifications and equivalents, which may be included within the spirit and scope of the invention as defined by the appended claims. Furthermore, in the following detailed description of the present invention, numerous specific details are set forth in order to provide a thorough understanding of the present invention. However, it will be evident to one of ordinary skill in the art that the present invention may be practiced without these specific details.

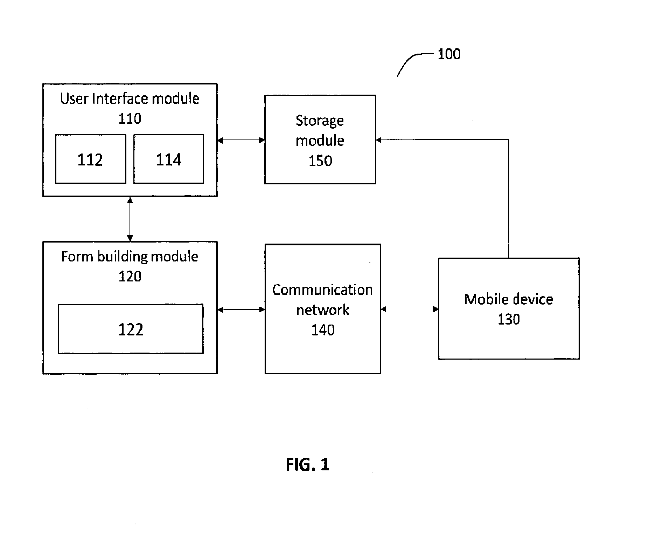

Referring to **FIG. 1****,** which shows a system 100 for electronic form management according to an embodiment of the present invention, the system 100 comprises a user interface module 110 for inputting an electronic form in a source format. The user interface module 110 comprises a remote computer system 112 operatively connected to an input device 114 including a scanner for uploading the electronic form in a source format. The system 100 also comprises a form building module 120 configured to modify the electronic form including creating a mobile form structure by overlaying one or more selectable data field. The form building module 120 comprises a graphical selection interface 122 for selecting one or more data fields for overlaying onto the electronic form in source format. A mobile device 130 is configured to receive the modified electronic form that is published and to populate the data fields of the modified electronic form through a communication network 140 comprising an internet or cloud network. The system 100 further comprises a storage module 150 linked to the user interface module 110, wherein the storage module 150 comprises a server or a database configured to receive the modified electronic form which is completed by populating the data fields. The storage module 150 further stores the completed form data for future reference by the user creating the form. The electronic form is modified by overlaying with one or more data fields selected from the graphical selection interface 122 comprising a plurality of data fields grouped in a hierarchical order. Overlaying includes 'drag and drop' of one or more data fields selectable from the graphical selection interface 122 onto the received electronic form in the source format. The form in source format comprises an image file, a PDF file and a MS word file or other file format through which the source form can be submitted. In an embodiment the electronic form provided in the source format basically includes a form template based on which the form structure is modified, described as the mobile form structure that is created by SignTech software. The modified electronic form structure is validated for structural specifications and distributed via publishing the modified form online or sending via email to plurality of recipient entitled to receive the form for completion.

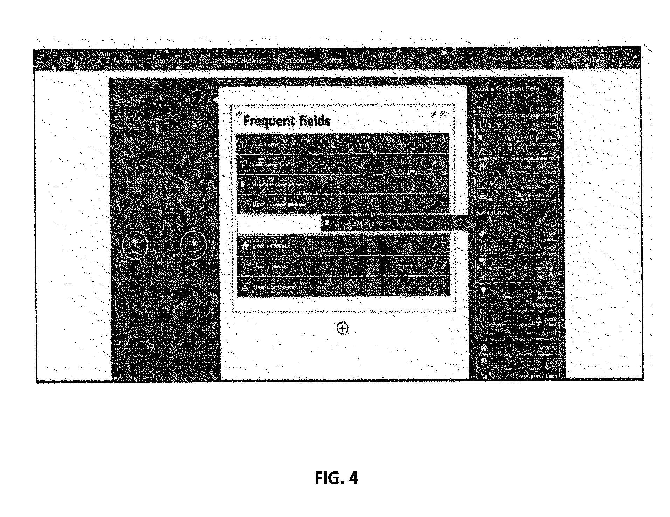

**FIG. 4** shows an exemplary view of the graphical selection interface comprising selectable data fields. The electronic form data fields comprises hierarchically grouped as different data tabs, wherein each data tab comprising a plurality of field sets and each field set comprising a plurality of data element. For example; the data element forms the basic unit comprises of text, paragraph and number whereas field set comprises name, address and the like, whereas the data tab comprises user details.

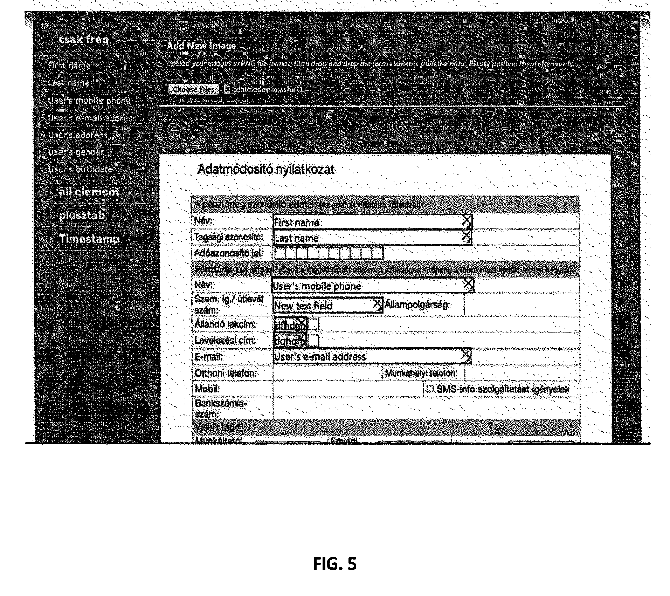

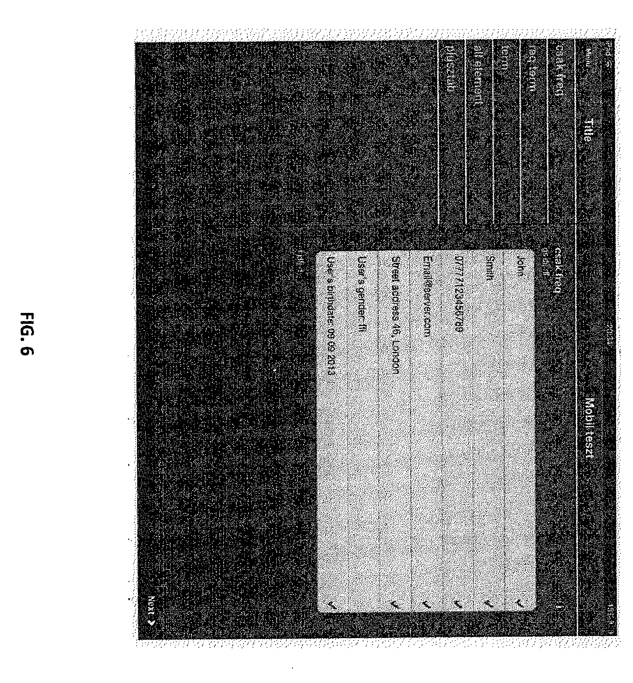

**FIG. 5** shows an exemplary view of the electronic form structure overlaid with data fields from the graphical selection interface. In an embodiment, the data tab comprises special type filed set, for example: frequent fields which comprises data fields that are frequently used in a form belonging to a particular category. **FIG. 6** shows an exemplary view of the electronic form accessed through a mobile device. In an embodiment, the form structure comprises an additional field for user signature, wherein the end user can sign using a stylus or by hand.

The form recipients or end users retrieve the modified electronic form using a mobile device connected to a communication network including internet or cloud network. The mobile device comprises a personal digital assistant (PDA), a mobile phone, a smart phone, a laptop a tablet PC and computer systems with touch screen interface using which the form recipient can populate one or more data fields of the form and send it back to the sender or a form management system.

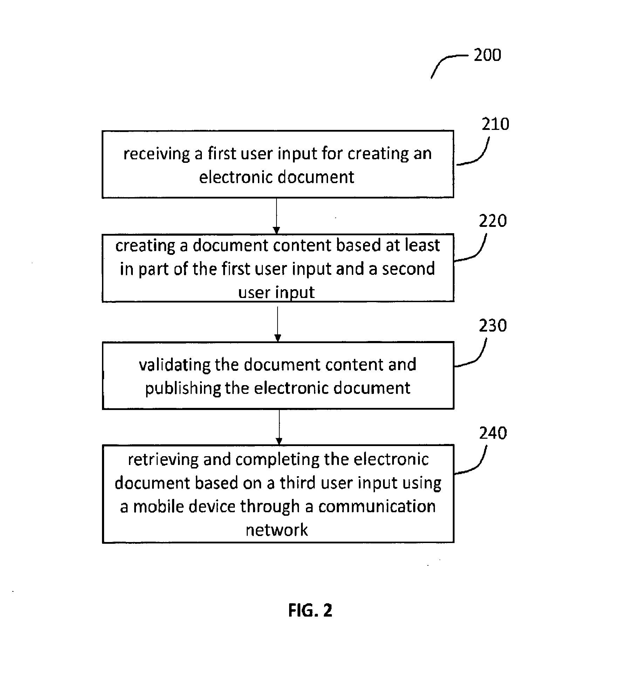

**FIG. 2** illustrates a flowchart of a computer implemented method 200 for electronic document management. The method 200 comprises of steps i) receiving a first user input for creating an electronic document, as in step 210; ii) creating a document content based at least in part of the first user input and a second user input, as in step 220; iii) validating the document content and publishing the electronic document, as in step 230; and iv) retrieving and completing the electronic document based on a third user input using a mobile device through a communication network, as in step 240.

In an embodiment, the method 200 further comprises transmitting of the completed electronic document to a first user or a third user, wherein the first user comprises an entity for which the electronic document including an electronic form is created and the third user comprises a plurality of end users entitled to receive and complete the form. For example, the end users will receive a completed form in a PDF format in their mobile device upon completion. The first user input comprises a electronic document in a source format including documents in an image format, PDF format, MS word format or any other machine readable file format, based on which the document content is created. In an embodiment, a document management system receives the electronic document in the source format along with basic information regarding the document type, for example: the category of document such as finance for creating finance related forms or documents. The first user input further comprises of user details, document title, document distribution options such as online publication, distribution via email and similar modes of distribution.

The second user input comprises one or more data fields selectable from a graphical selection interface of the document management system. Creation of document content comprises selection of data fields based on the first user input including a document template form in PDF or MS word or image format, document type, category and layout. In an embodiment, the data fields are selected from a graphical selection interface and overlaid onto the document template received from the first user.

Upon creation of the document content by adding or removing one or more data fields selected from a graphical user interface of the document management system, thus created document is sent back to the first user for validation. For example, the company user may receive an email notifying creation of the form structure along with hyperlink to test the form. The hyperlink comprises a mobile test link for testing using a mobile device through the installed form management application, and upon validation of the document content, the first user distributes the document to appropriate recipients or end users through publishing the electronic document online or sending it via email.

The third user input comprises populating one or more data fields of the document by the recipient or the end user by using the mobile device connected to a communication network such as internet or cloud network. Thus, creating and distributing an electronic paperless mobile form to a plurality of remote end users for completion.

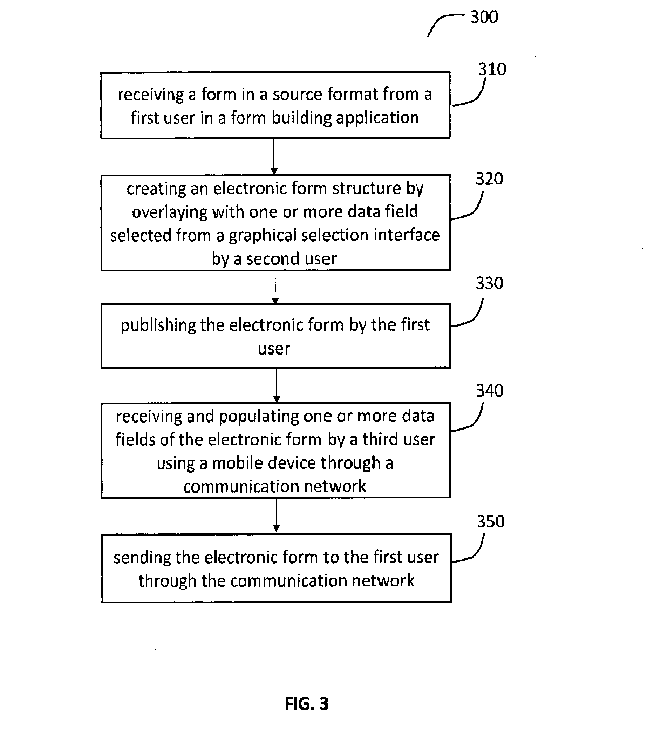

**FIG. 3** illustrates a flowchart of a computer implemented method 300 for electronic form creation and distribution. The method 300 comprises of steps; i) receiving a form in a source format from a first user in a form building application, as in step 310; ii) creating an electronic form structure by overlaying with one or more data field selected from a graphical selection interface by a second user, as in step 320; iii) publishing the electronic form by the first user, as in step 330; iv) receiving and populating one or more data fields of the electronic form by a third user using a mobile device through a communication network, as in step 340; v) sending the electronic form to a server coupled to the first user system for processing the third user through the communication network, as in step 350.

The method of sending the electronic form and related data also includes automatic data interface from the mobile device using the form building application to the first user data systems or any specified electronic location including systems such as SalesForce/SugarCRM and the like.

According to an embodiment, the step 340 can be repeated by as many end users as required depending on the requirement of the form and process being implemented. The form can also be passed back to previous end users who have completed a predetermined set of the data fields or can be forwarded to new users to complete additional data fields as a part of the process. Once all users have completed all relevant parts of the process the form is sent to a different database/server that is linked to user interface creating the form.

The first user comprises an entity, a company, or an organization who wishes to create a form for a specific purpose. Second user comprises a content administrator or a content service provider creating the electronic form structure and sending the electronic form the first user for validation and publishing the approved form structure. The third user comprises a recipient or an end user, who populates one or more data fields of the received electronic form using a mobile device and sends back the completed electronic form to the first user or third user through the communication network.

In an exemplary embodiment, a company's representative who wishes to create a form, gains access to the form building application and registers the company's details. Once registered, uploads a form in an original format along with basic details such as form category, distribution option, country, file name, and the like. A content admin is notified regarding the uploaded form, who proceeds to create form structure by adding different fields to the original form layout by drag and drop method from a graphical interface of the application. Thus modified, the form is sent to the company's representative for validation of form structure and published online. Multiple end users retrieve the published form by accessing their mobile device through internet or mobile network and completes the form by populating data fields of the form and sends back to the company's database or server for further processing or storage.

In an embodiment, the electronic form can be retrieved, completed and sent back using the mobile device through a network including internet or cloud or mobile network. In a different embodiment, the form structure can be stored offline for end users to access, wherein the end user's inputs are stored in the mobile device while filling the form and the completed form is sent to the company server when network is available.

In an embodiment, the electronic form of the present invention comprises static form and dynamic forms. In the static form, the form structure is stored in the second user server (a content service provider) and sent to a mobile device for an end user to view, add or modify data for completion of form. The completed form is sent back to the first user server. In the case of dynamic form, the form structure is stored in the first user server (company or an entity) sent to a mobile device for an end user to add or modify data as a part of form completion. Here the dynamic form structure is constantly altered or re-created as the end user completes each relevant data field which determines the next data field and options based on last entered data field.

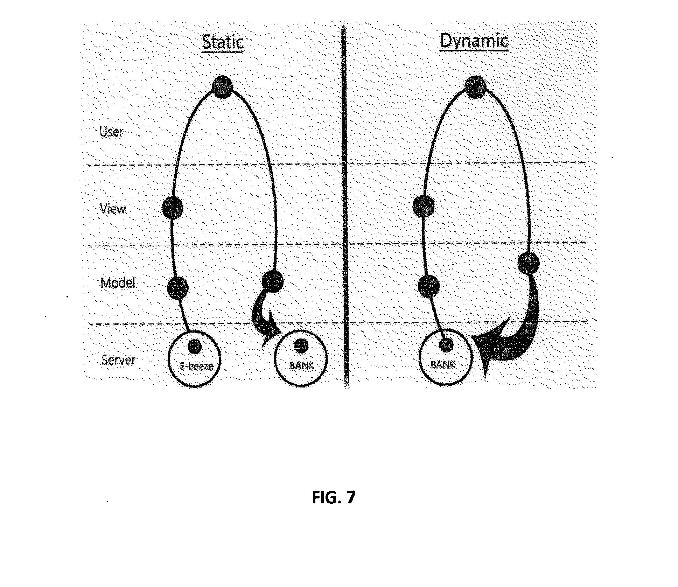

**FIG. 7** shows a process flow of static form and dynamic form processing. The static form structure is stored in a content provider server (for example, E-beeze) and being sent to a mobile device wherein a model receives and processes the form structure, the model determines the selection of data fields and its layout. The user interacts by adding data fields or modifying data. The model processes and compress the form data and sends to the company server (for example, a bank). In dynamic form the user entered data is processed and sent to the company server and in response, the company server sends a new form structure that is created dynamically to the model and the cycle continues.

## Claims

1. A computer implemented method for electronic document management, the method comprising:
receiving a first user input for creating an electronic document;
creating a document content based at least in part of the first user input and a second user input;
validating the document content and publishing the electronic document;
retrieving and completing the electronic document based on a third user input using a mobile device through a communication network.

2. The method of claim 1 further comprises transmitting of the completed electronic document to a first user or a second user, wherein the first user comprises an entity and the second user comprises a content provider or content administrator.

3. The method of claim 1, wherein the first user input is a document in a source format comprising an image file, a MS word file and a PDF file.

4. The method of claim 1, wherein the second user input comprises at least one data field selectable from a graphical selection interface.

5. The method of claim 1, wherein the third user input comprises populating one or more data field of the electronic document.

6. The method of claim 1, wherein creating the document content comprises overlaying one or more data fields onto the document in source format.

7. The method of claim 1, wherein the communication network comprises internet network or cloud network.

8. The method of claim 1, wherein the mobile device comprises a personal digital assistant (PDA), a mobile phone, a smart phone, a laptop and a tablet PC or a desktop PC

9. A computer implemented method for electronic form creation and distribution, the method comprising:
receiving a form in a source format from a first user in a form building application;
creating an electronic form structure by overlaying with one or more data field selected from a graphical selection interface by a second user;
publishing the electronic form by the first user;
receiving and populating one or more data fields of the electronic form by a third user using a mobile device through a communication network and
sending the electronic form to the first user through the communication network.

10. The method of claim 9, wherein the source format comprises of an image file, a MS word file and a PDF file.

11. The method of claim 9, wherein the first user comprises one of a company, a content administrator, and a content service provider.

12. The method of claim 9, wherein the second user comprises a form recipient or an end user populating one or more data fields of the electronic form.

13. The method of claim 9, wherein the communication network comprises an internet network or a cloud network.

14. The method of claim 9, wherein the mobile device comprises a personal digital assistant (PDA), a mobile phone, a smart phone, a laptop and a tablet PC.

15. A system for electronic form management, comprising:
a user interface module for providing an electronic form in a source format;
a form building module for modifying the electronic form by overlaying one or more selectable data field; and
a mobile device to receive and populate the data fields of the modified electronic form through a communication network

16. The system of claim 15 further comprises a storage module linked to the user interface module for receiving completed electronic form.

17. The system of claim 15, wherein the user interface module comprises a computer system operatively connected with an input device.

18. The system of claim 15, wherein the form building module comprises a graphical selection interface for selecting one or more data fields.

19. The system of claim 15, wherein the mobile device comprises a personal digital assistant (PDA), a mobile phone, a smart phone, a laptop, a desktop computer system with touch screen and a tablet PC.

20. A computer implemented method for electronic form processing, comprising:
receiving a form in a mobile device from a company server;modifying data fields of the form upon completion of each data field by an end user;
determining the consecutive data field based on last entered data field; and
processing and sending the form to the company server.
